# EUROPEAN PATENT SPECIFICATION

(11) **EP 2 229 515 B1**
(45) Date of publication and mention of the grant of the patent: **16.09.2015**
(21) Application number: 09701455.9
(22) Date of filing: 07.01.2009
(51) Int. Cl.: F02B 37/10, F02B 39/00, F02B 39/16, F02C 6/12, F01D 15/10, F02B 29/04, F02B 33/34, F02B 39/10, F02B 37/013

(54) **TURBOCHARGER ARRANGEMENT FOR A PISTON ENGINE**
TURBOLADERANORDNUNG FÜR EINEN KOLBENMOTOR
GROUPE DE SURALIMENTATION POUR UN MOTEUR A PISTON

(30) Priority: 10.01.2008 FI 20085019
(43) Date of publication of application: 22.09.2010
(73) Proprietor: Wärtsilä Finland Oy, 65380 Vaasa (FI)
(72) Inventor: ARKKIO, Antero, FI-02130 Espoo (FI); LARJOJA, Jaakko, FI-52700 Mäntyharju (FI)
(74) Representative: Ansala, Jyrki Matti
(86) International application number: PCT/FI2009/050008
(87) International publication number: WO 2009/087273

(56) References cited:
- EP-A2- 1 191 202
- US-A- 5 605 045
- US-A1- 2002 040 581
- US-A1- 2002 041 813
- US-B1- 6 301 889
- US-B1- 6 305 169

## Description

The invention relates to a turbocharger arrangement for a piston engine in accordance with the preamble of claim 1.

To supercharge a piston engine is, as such, known from prior art and it offers many advantages. Especially exhaust gas charging, i.e. turbocharging, is as such a very advantageous way to execute supercharging, since it utilises the energy contained in exhaust gas, which would otherwise possibly go wasted. In a turbocharger, a turbine section adapted in the exhaust gas flow of the engine is arranged to drive the compressor section adapted in the feed air flow to the engine. The turbine section and the compressor section are typically adapted at the ends of a common shaft, which shaft is axially and radially mounted in bearings on the body of the turbocharger.

High demands are imposed on the bearing system in a turbocharger. The rotor of the supercharger rotates in operation several tens of thousands of revolutions per minute and the bearings are exposed to high temperatures. The exhaust gas flow transmits axial forces to the shaft via the turbine wheel of the turbine section, which forces need to be compensated by axial bearings. On the other hand, the radial clearances between the turbine wheel and the compressor impeller and their respective housings are very small thereby imposing high demands on radial bearings.

The publication US 2005/0198956 A1 discloses a bearing system for a turbocharger realised with magnetic bearings, in which system the radial bearings are embodied as passive permanent magnets and the axial bearings as active magnetic bearings. The axial position of the shaft is determined by means of a sensor, the signal of which guides the electromagnet of the active bearing and thus the axial excursions will be compensated.

Due to the operating principle of a turbocharger, in such running conditions of the engine, in which the temperature and mass flow rate of exhaust gas is low, e.g. with low loads and operating speeds, it is often impossible to produce a desired boost pressure for the feed air system of the engine by the compressor of the turbocharger. On the other hand, the operation of the turbocharger is also affected by its mass. The operation of the turbocharger in the transient situations of the engine load is not always able to follow the engine load changes at sufficient speed, but the response of the turbocharger has a certain delay, which also retards the reactivity of the engine accordingly.

There have been suggestions to solve the above-mentioned problems related to the operation of turbochargers for instance by connecting a separate electrically powered additional compressor in series with the compressor of the turbocharger as well as by means of an auxiliary electric motor to be coupled to the shaft of the turbocharger.

The publication US 6,390,789 B1 discloses an electric motor-driven turbocompressor apparatus, in which the electric motor and its bearings are cooled by a gas flow, which is led from the pressure side of the compressor stage to the electric motor and then again back to the suction side of the compressor stage. The cooling provided by this arrangement is insufficient.

The publication DE 10 2005 056797 A1 discloses a two-stage turbocharger arrangement, which comprises both a two-stage compressor and a turbine. Both turbine-compressor pairs are coupled to their respective shafts and the shafts are arranged within each other. The turbines are arranged at one end of the nested shafts and the compressors at the other end. A solution of this kind is relatively complicated especially in terms of the bearing system of two separate turbine-compressor pairs.

The publication shows in general that a combined motor-generator can be adapted in conjunction with shafts either to bring energy to the shaft or to take energy from the shaft. To provide especially an inner turbine-compressor pair with such a motor-generator is technically very difficult. The solution is also complicated in view of both the construction and the operation.

The publication Modern Engine Technology from A to Z 2007, SAE, p. 956-957, shows a turbocharger, in which an electric motor is arranged on the shaft connecting the compressor and turbine. To arrange a sufficient pressure ratio for the compressor by means of the solution disclosed herein results in declined efficiency and is thus problematic.

Document US 2002/041813 A1 discloses a turbocharger arrangement comprising a compressor section, a turbine section and an electric machine which compressor section comprises a first compressor stage and a second compressor stage, wherein the compressor section, the turbine section and the electric machine are coupled to the same shaft.

Although the above solutions are advantageous as such, there have lately arisen needs to improve the operation of the turbocharger and also that of the engine. To use an electric motor and to adapt it into a turbocharger is very challenging, e.g. due to the required, relatively high rotational speed. In order to operate reliably for the entire lifetime of the rest of the assembly, the construction and operation of an electric motor of this kind needs to be such that it meets the demands imposed on the electric motor by the operation and construction of the turbocharger.

Thus, the purpose of this invention is, in particular, to raise the level of technology from prior art by presenting such a turbocharger arrangement that comprises a compressor section, a turbine section and an electric machine, which compressor section comprises a first compressor stage and a second compressor stage and the operation of which, when connected to an engine, provides better overall operation of the engine in different operating conditions.

The turbocharger arrangement according to the invention is characterised mainly in the compressor section having the first compressor stage and the second compressor stage is adapted axially between the turbine section and the electric machine, the two-stage compressor section, the turbine section and an electric machine being coupled to a same, common shaft.

In this manner, the compressor section operates with high efficiency and the operation of the engine and the supercharger arrangement is more controllable in various operational situations. By realising the supercharging with a two-stage compressor it is also possible to achieve a considerably higher boost pressure than with a one-stage compressor. Also the efficiency of the turbocharger may be raised significantly through two-stage supercharging and moreover, the operation of the two-stage compressor section, specifically, can be made quick-responsive, e.g. in transient situations of the engine, by means of the electric machine.

Preferably, the compressor section, turbine section and electric machine are arranged on the shaft so that the compressor section is adapted axially between the electric machine and the turbine section. In this way, the gas flow through the compressor and the cooling of the electric motor can be arranged efficiently and compactly by providing the electric machine with at least one flow channel and arranging the suction conduit of the compressor section in flow connection with the gas flow channel of the electric machine so that suction air for the compressor section is arranged to flow through said at least one gas flow channel of the electric machine.

The electric machine is arranged to retard the operation of the turbine section by producing electric energy during normal running of the engine. In addition, the electric machine is arranged to assist the operation of the compressor section in such running conditions of the engine, where the amount of exhaust gas is not sufficient for the turbine to be able to provide enough power for the compressor section.

Preferably, an intercooler is arranged between the first compressor stage and the second compressor stage in the flow channel for gas, whereby the operation of both compressor stages is efficient and the power demand of the compressor is reduced considerably.

The electric machine is provided with a permanent magnet rotor, whereby its operation is efficient in regard to its size and no wiring is required to the rotor. With a permanent magnet rotor also the heat losses of the rotor are minor, whereby the amount of air to be led through the air gap can be made small, which in turn reduces the pressure loss in cooling.

According to an embodiment of the invention, the gas sealing of the compressor impellers of the compressor stages in the turbocharger arrangement are arranged so that the total axial force impact of the compressor stages is 90 - 110 % of the axial force exerted on the shaft by the turbine section. Hereby, the assembly formed by the compressor section, turbine section and electric machine will be balanced with respect to the axial forces by using process technological means, and consequently, the loading and wearing of the axial bearing will be minimised in operation.

The gas sealing may, according to an embodiment, be realised so that the first compressor stage and the second compressor stage comprise a compressor impeller, which is adapted on a common shaft, and that the sealing of the first compressor impeller is arranged between the shaft and the body part and the sealing of the second compressor impeller is arranged between the compressor impeller and the body part.

According to an embodiment of the invention the shaft comprises an axial flow channel, which extends from the compressor section to the bearings of one end of the shaft for conveying the gas pressurised by the compressor section to a bearing in order to cool it.

According to a further embodiment of the invention the electric machine is provided with at least one flow channel for gas, and the suction conduit of the compressor section is arranged in flow connection with the gas flow channel of the electric machine so that suction air for the compressor section is arranged to pass through said at least one gas flow channel of the electric machine. The gas flow channels of the electric machine comprise an air gap between the rotor and the stator part of the electric machine as well as gas flow channels for the stator part and/or its body part arranged in the stator part. Preferably the gas flow channels of the stator part and/or its body part of the electric machine are dimensioned in regard to the air gap between the rotor and the stator part of the electric machine so that an exactly sufficient amount of air for cooling passes through said air gap, whereby the pressure loss in the cooling can be minimised. Advantageously the cross-section of the gas flow channels of the stator part is 95 - 98 % of the total cross-sectional area of the gas flow channels of the electric machine.

Additional characteristic features of the invention are disclosed in the appended claims.

Several advantages are achieved by the turbocharger arrangement according to the present invention. By the arrangement it is possible, e.g., to improve the load-carrying capacity of the engine, its operation with partial loads/at a low rotary speed, as well as its efficiency. By means of the invention also emissions can be reduced significantly. Moreover, the arrangement according to the invention enables a better startability for the engine.

In the following, the invention and its operation will be explained with reference to the appended schematic drawings, of which
Figure 1 shows a turbocharger arrangement according to an embodiment of the invention connected to a combustion engine,
Figure 2 shows a turbocharger arrangement according to another embodiment of the invention,
Figure 3 depicts the cross-section III-III of Figure 2;
Figure 4 shows the principle for compensating the axial forces of the turbocharger arrangement; and
Figure 5 shows the construction of a permanent magnet rotor according to an embodiment of the invention.

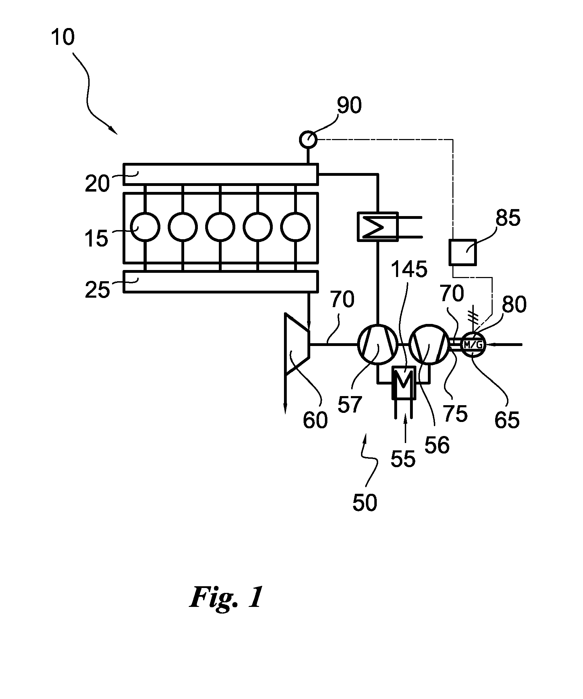

Fig. 1 shows a turbocharged piston engine 10. The engine comprises a plurality of cylinders 15, which are for instance in the case of a four-stroke engine in flow connection, controlled by valves (not shown), with combustion gas and exhaust gas collectors 20, 25. The engine comprises a turbocharger arrangement 50 for a piston engine including a two-stage compressor section 55, a turbine section 60 and an electric machine 65, all coupled to a same shaft 70. The shaft may be built-up in pieces or it may consist of one piece. While the engine is running, exhaust gas flows from the cylinders through an exhaust gas collector to the turbine section 60 of the turbocharger arrangement 50, in which the exhaust gas performs work. This work is utilised, according to the invention, by the compressor section 55 and/or by the electric machine 65. The compressor section 55 and the electric machine 65 are also integrated in such a way that the suction conduit 75 of the compressor section is arranged in flow connection with the cooling channels 80 of the electric machine 65 and that the suction air for the compressor section 55 is arranged to pass through the channels 80 of the electric machine 65. In this manner, the gas participating in the combustion of the engine, typically combustion air, is led first via the channels 80 of the electric machine, and from there further to the compressor section 55, where the pressure of the combustion gas is raised.

By the supercharger arrangement 50 according to the invention, an embodiment of which is shown in Figure 1, significant advantages are achieved in various operational situations of the engine 10. The electric machine runs both as a generator and a motor, depending on the power balance of the turbocharger arrangement. In such running situations, where the amount of exhaust gases is rather small, the electric machine 65 may be used so as to work for the compressor section 55 and thus maintain a higher boost pressure than it would be possible in this situation by the power received from the turbine section. Then, the electric machine acts as an electric motor assisting the rotation of the compressor section.

In such situations, where the amount of exhaust gas from the engine and the energy it contains is larger than the compressor section is able to utilise or is required for supercharging combustion air, the electric machine 65 may be used for retarding the turbine (and simultaneously also the compressor, since these are located on the same shaft) and at the same time for producing electric energy. In this case, the electric machine acts as a generator. This makes it possible that all the exhaust gases of the engine, i.e. the entire exhaust gas flow, can always be led through the turbine section 60, and accordingly, the arrangement does not require a wastegate or other equipment, such as adjustable inlet vanes, for restricting the power of the turbine. In this manner, the arrangement according to the invention enables the dimensioning of the turbine section very efficiently without any risk that the boost pressure or the rotary speed of the supercharger arrangement would rise excessively, as the rotary speed of the assembly can be regulated by adjusting the retardation effect of the electric machine. Preferably, the design power of the turbine section 60 is 10 - 30 % higher than the design power of the compressor section, whereby the power of the electric machine is efficiently utilised both in power feed and power take-off situations.

According to an embodiment of the invention, the method of starting the engine includes a stage, in which the electric machine 65 of the turbocharger arrangement 50 is started before the engine, whereby the compressor section of the supercharger arrangement produces a raised pressure level for the engine cylinders essentially already at the starting moment. In this way, the engine starts more rapidly and reaches its normal operation faster and with lesser disturbance in the combustion process during the start-up.

The arrangement also comprises a control unit 85, which may be either a unit dedicated to the turbocharger arrangement or a part of a centralised control system of the engine. The control unit is arranged to guide at least the operation of the electric machine 65.

Invention relates according to an embodiment of the invention also to a method of running a turbocharged engine with high loads (more than 60 % of maximum capacity) in a turbocharger arrangement 50, which includes a compressor section 55, a turbine section 60 and an electric machine 65 coupled to a same shaft 70, in which method substantially the whole exhaust gas flow of the engine is led to the turbine section of the turbocharger arrangement, where the energy in the exhaust gas is converted to mechanical work, which is utilised for running the compressor section of the turbocharger arrangement and for producing electricity by the electric machine. Further in the method, the combustion air of the engine is heated by transferring heat from the electric machine 65 to the combustion air before the combustion air is conveyed to the compressor section 55.

According to an embodiment, the turbocharger arrangement comprises also a measuring device 127 for measuring the rotational speed of the shaft. In this case, the turbocharger arrangement is preferably run so that the operation of the electric machine is controlled on the basis of the measurement of rotational speed in such a way that that energy is either brought to the electric machine or energy is taken from the electric machine so as to maintain the rotational speed of the turbocharger arrangement within the range of predetermined minimum and maximum rotational speeds.

According to an embodiment, the turbocharger arrangement comprises also a pressure gauge 90 for measuring the pressure produced by the compressor section 55. In this case, the turbocharger arrangement is preferably run so that the operation of the electric machine 65 is controlled on the basis of pressure measuring in such a way that energy is either brought to the electric machine or energy is taken from the electric machine so as to maintain the pressure produced by the turbocharger arrangement within the range of predetermined minimum and maximum pressures.

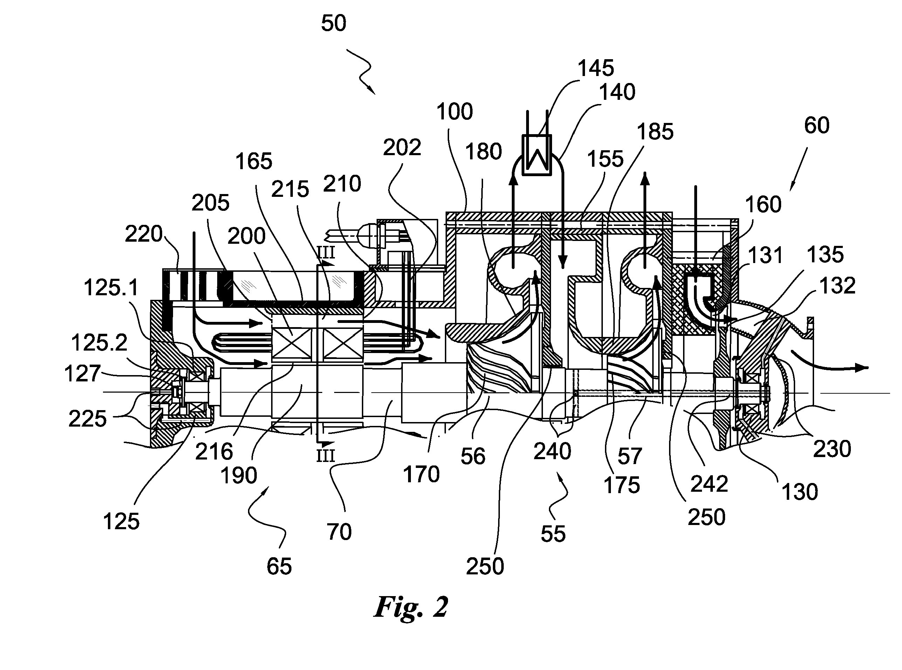

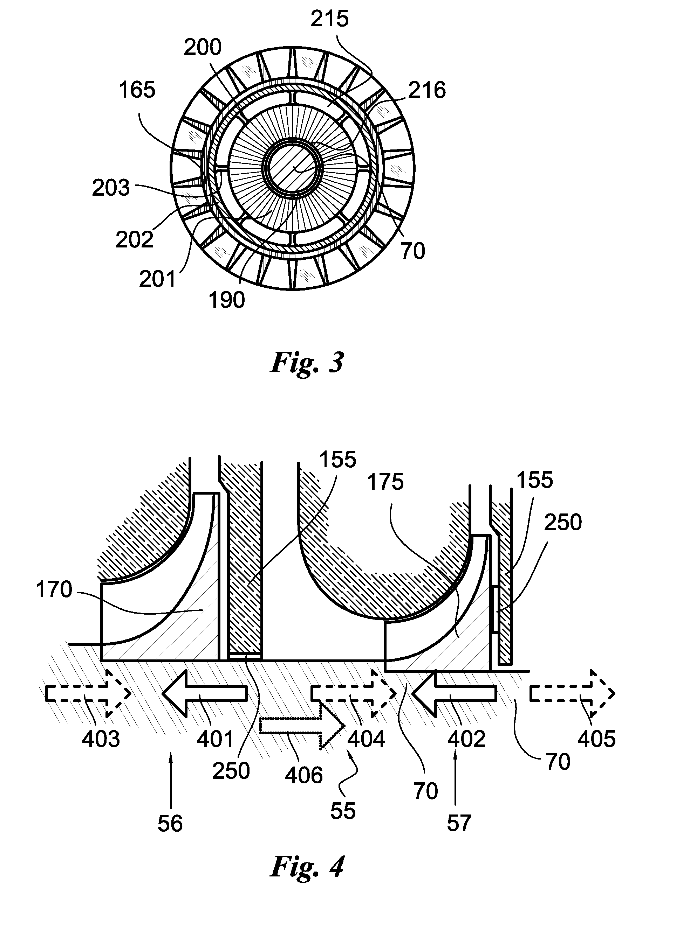

Fig. 2 shows in more detail an embodiment of the turbocharger arrangement 50 according to the invention, which can be connected in conjunction with a combustion engine by using the principle shown in Figure 1. In this way, a very compact assembly is provided, by which the operation of the engine can be improved. The turbocharger arrangement operates very flexibly according to the need determined by the operating conditions of the engine, which makes it advantageous e.g. to need to oversize the turbocharger for lower rotational speed ranges of the engine, which was earlier considered a problem. The turbocharger arrangement 50 shown in Figure 3 comprises a body 100, which includes a body part 165 of the electric machine, a body part 155 of the compressor section and a body part 160 of the turbine section, all connected to each other, and in which the body part 155 of the compressor section is adapted between the respective body parts of the electric machine and the turbine section.

The turbine section is here an axial turbine and it comprises a turbine wheel 135 and a set of inlet vanes 131 preceding it in the flow direction of gas. On the trailing side of the turbine section in the embodiment according to Figure 3, there is arranged a diffuser 132, to the flange of which the flue gas channel of the engine can be attached. The flow of gas in the turbine section is illustrated by arrows.

The compressor section comprises a radial compressor of two stages, i.e. a first stage 56 and a second stage 57, connected to one another so that there is a flow channel 140 arranged from the pressure side of the first stage to the suction side of the second stage. The flow channel 140 is provided with an intercooler 145, by means of which the combustion air flowing from the first stage to the second stage can be cooled before it is fed to the second stage 57. Both compressor stages comprise a compressor impeller 170, 175, respectively, adapted on a common shaft 70 and inside compressor enclosures 180, 185 of the first and second stage, respectively, arranged in the body. The flow of gas in the compressor section is illustrated by arrows.

With reference to Figures 2 and 3, the electric machine 65 of the turbocharger arrangement 50 comprises a permanent magnet rotor 190 arranged in conjunction with the shaft 70 and a stator part 200 surrounding it. The stator part is supported on the body part 165 of the electric machine and it comprises an electric connection 202 for transferring electric energy to the electric machine or from the electric machine to the network. The stator part 200 comprises gas flow channels 215 extending from the first end 205 to the second end 210 in its axial direction, which channels also act as coolant channels for the electric machine. In this embodiment, the first gas flow channels 215 of the stator part are arranged radially outside the coil section 201 of the stator part to form an essentially annular flow channel, whereby the coil section 201 of the stator part 200 of the electric machine is arranged radially inside the stator part and/or the flow channels 215 of its body part.

The stator part is supported on the outer section 202 by means of radially extending support parts 203. An air gap 216 arranged between the stator and the rotor acts as a second gas flow channel. The flow channels form at the same time both coolant channels for the electric machine 65 and suction channels for the compressor section. Preferably, essentially all, or at least most of, the suction air of the compressor section, is arranged to pass through the gas flow channels 215, 216 of the electric machine. In this way, the amount of the gas flow, which in practise consists of the combustion air of the engine, is always sufficient for cooling the electric machine and on the other hand, in a correct temperature for the cooling. The gas flow channels 215 of the stator part and/or its body part in the electric machine 65 are dimensioned in regard to the air gap between the rotor and stator part of the electric machine so that an exactly sufficient amount of air for the cooling passes through said air gap, whereby the pressure loss in the cooling can be minimised.

The cross-sectional flow area of the gas flow channels 215 of the stator part and/or its body part arranged in the stator part 200 is over 90 % of the total cross-sectional area of the flow channels of the electric machine 65, and the cross-sectional flow area of the air gap 216 between the stator part 200 and the rotor 190 is less than 10 % of the total cross-sectional area of the flow channels of the electric machine 65. Thus, less than 10 % of the total gas flow is arranged to flow through the air gap 216 between the stator part 200 and the rotor 190. The cross-section of the gas flow channels of the stator part is determined on the basis of this. It is preferably 95 - 98 % of the total cross-sectional area of the gas flow channels of the electric machine 65, whereby a gas flow may always pass through the air gap 216 between the stator part 200 and the rotor 190, while the machine is running. This ensures the cooling of the rotor 190 so that the air gap, however, does not cause any excessive losses in the magnetic operation of the electric machine. The flow of gas in the electric machine is illustrated by arrows.

The shaft 70 of the turbocharger arrangement according to Figure 2 is rotatably supported on the body by means of bearings 125 arranged at the first end of the shaft and bearings 130 arranged at the second end thereof. The shaft 70 may be an essentially rigid shaft built-up in pieces, or it may be made of a one-piece shaft. The bearings 125 at the first end are supported on the body part 165 of the electric machine 65 and the bearings 130 at the second end on the body part 160 of the turbine section. The body part 165 of the electric machine comprises openings 220 arranged in the shell of the body part or at the end thereof for enabling the flow of the suction air of the compressor section to the side of the first end 205 of the stator part of the electric machine. In this embodiment the openings open radially, but also another kind of solution is possible. In the embodiment according to Figure 2, the bearings at the first end comprise both a radial bearing system 125.1 and an axial bearing system 125.2. An inlet and outlet 225 for lubrication oil is arranged for these systems. The housing construction of the bearings at the first end is restricted by the gas flow space facing the first end 205 of the stator part, whereby the suction air of the compressor section also acts as a medium for cooling the housing construction of the bearings at the first end. In practise, the radial bearing system is preferably a slide bearing system.

The bearings 130 at the second end (referring to the end facing the turbine section) of the shaft 70 comprise in this embodiment only a radial bearing system. The bearings 130 at the second end comprise a bearing housing, which is adapted in this embodiment in the body part 160 of the turbine section 60, but the position of the bearings at the second end of the shaft may in some applications be also inside the turbine section 60, whereby the impact of the exhaust gases on the temperature of the bearing is smaller than in the situation shown in the figure. An inlet and outlet 230 for lubrication oil is arranged for the bearings in conjunction with the body part. The temperature of the turbine section is relatively high due to the hot exhaust gases flowing therethrough, whereby cooling is arranged in conjunction with the bearings at the second end of the shaft. The cooling arrangement comprises at least one axial channel 242, which extends from the end of the shaft 70 past the bearings at the second end, and at one end of which channel there is at least one radial channel 240 extending from the surface of the shaft 70 to the axial channel 242. The axial channel 242 extends preferably to the suction side of the second turbine stage 57, to a point after the intercooler 145 in the gas flow. In this embodiment, the radial channels 240 are arranged on the shaft 70 in the area between the compressor impellers 170, 175 of the first 56 and second 57 compressor stage, respectively. In operation, after the first compressor stage 56, gas (air) already at raised pressure and cooled by the intercooler flows along the channels 240, 242 past the bearings 130 at the second end of the shaft, inside the shaft, keeping the temperature of the bearing suitably low. From the channel 242, the gas is discharged into the diffuser of the turbine section and from there, into the exhaust gas channel through the clearances of the turbine wheel 135.

The channels 240, 242 can be utilised also in conjunction with the detachment of the turbine wheel and the compressor impeller of the second compressor stage by leading fluid at low temperature into the shaft 70 through the channel in order to lower the temperature of the shaft and to reduce its diameter, while the shrink fit between the shaft and the turbine wheel or the compressor impeller of the second compressor stage is disassembled by heating said turbine wheel or compressor impeller.

In order to decrease the loads on the thrust bearings, i.e. the axial bearings, the axial forces generated by the compressor impellers and the turbine in a normal operational situation are according to an embodiment of the invention compensated or at least minimised. The method of arranging sealings is shown in Figure 4. This is provided by the shaft sealings of the compressor impellers 170, 175 in the two-stage compressor section 55 as follows. Sealings 250 are arranged in a certain way behind the compressor impellers, i.e. in a radial compressor on the opposite side of the impeller with respect to the blades. The sealings consist of labyrinth seals. In figure 4, the arrows 401, 402 with unbroken lines illustrate the forces pushing the thrust bearing and the arrows 403, 404, 405 with dashed lines the forces pulling the thrust bearing. The forces 401, 402, 403 and 404 are generated by the compressor section and the force 405 by the turbine section. The arrow 406 with a dash-dotted line illustrates the load imposed on the thrust bearing in a normal operational situation. The total force impact of the compressor stages is according to an embodiment of the invention adjusted so that it corresponds with a precision of +/-10 % the axial force 405 exerted on the shaft 70 by the turbine section 60, whereby in a normal operational situation the load imposed on the thrust bearing is about +/-10 % of the axial force exerted on the shaft by the turbine and thus the total force impact of the compressor stages is 90 - 110 % of the axial force 405 exerted on the shaft 70 by the turbine section 60. Accordingly, the axial forces in normal situations are relatively small, which results in the load on the thrust bearing being relatively small as well, and thereby its lifetime being long. Almost a balance situation of this kind is achieved so that the sealing 250 of the second compressor stage is arranged between the shaft 70 and the body part 155 and between the second compressor impeller 175 and the body part 155. This provides behind the compressor impellers such surface areas with respect to the pressures and/or forces prevailing there and exerted on other components of the turbocharger arrangement that said force balance can be achieved.

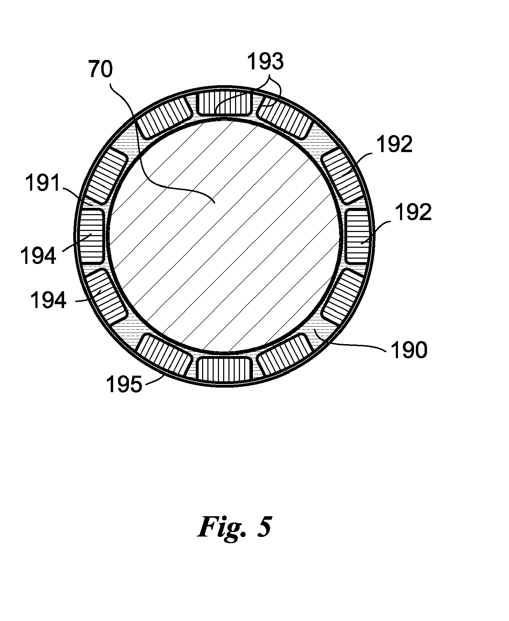

Fig. 5 shows an advantageous construction of the rotor 190 of the electric machine in a turbocharger arrangement according to the invention. The electric machine is a permanent magnet machine, whereby the rotor comprises a plurality of permanent magnets 192. The rotor 190 comprises a cylindrical cage 191. The cage 191 is provided with longitudinal grooves 193 on its periphery, in which grooves permanent magnets 194 are arranged. The material of the cage is preferably aluminium, which protects the permanent magnets against the alternating magnetic field and thereby against induced eddy currents. Consequently, the power losses in the rotor will be smaller. The cage is also the component, by which the rotor 190 of the electric machine is coupled to the shaft 70 of the turbocharger arrangement. The joint of the cage is preferably arranged around the shaft 70 by utilising shrinkage fit technique.

With high rotational speeds the permanent magnets 194 and the cage 191 tend to get displaced due to centrifugal forces. In order to keep these components in place, at least one strap 195 is arranged to encircle the cage 191 and the permanent magnets 194. The strap may be a one-piece strap or it may consist of several separate straps.

It is to be noted that only a few most advantageous embodiments of the invention are described in the above. Thus, it is clear that the invention is not limited to the above-described embodiments, but may be applied in many ways in conjunction with different piston engines within the frame of the appended claims. The invention may be applied both to four-stroke and two-stroke engines, which are driven by liquid and/or gaseous fuel. The features described in conjunction with the different embodiments may be used in conjunction with other embodiments as well and/or various combinations of the described features may be made within the frame of the basic idea of the invention, if so desired and if technical feasibility for this exists.

## Claims

1. A turbocharger arrangement (50) comprising a compressor section (55), a turbine section (60) and an electric machine (65) which compressor section (55) comprises a first compressor stage (56) and a second compressor stage (57), **characterised in that** the compressor section (55) having the first compressor stage (56) and the second compressor stage (57) is adapted axially between the turbine section (60) and the electric machine (65), the two-stage compressor section (55), the turbine section (60) and an electric machine (65) being coupled to a same, common shaft (70).

2. A turbocharger arrangement according to claim 1, **characterised in that** the compressor section (55), turbine section (60) and electric machine (65) are arranged on the shaft (70) so that the compressor section is adapted axially between the electric machine and the turbine section.

3. A turbocharger arrangement according to claim 1, **characterised in that** the electric machine (65) is arranged to retard the operation of the turbine section (60) by producing electric energy.

4. A turbocharger arrangement according to claim 1, **characterised in that** the electric machine (65) is arranged to assist the operation of the compressor section (55).

5. A turbocharger arrangement according to claim 1, **characterised in that** an intercooler (145) is arranged between the first compressor stage (56) and the second compressor stage (57) in a flow channel for gas.

6. A turbocharger arrangement according to claim 1, **characterised in that** the electric machine is provided with a permanent magnet rotor (190).

7. A turbocharger arrangement according to claim 1, **characterised in that** the sealings (250) of the compressor impellers (170, 175) of the compressor stages are arranged so that the total force impact of the compressor stages is 90 - 110 % of the axial force (405) exerted on the shaft (70) by the turbine section (60).

8. A turbocharger arrangement according to claim 7, **characterised in that** the first compressor stage (56) and the second compressor stage (57) comprise a compressor impeller (170, 175), respectively, adapted on the common shaft (70), and that the sealing (205) of the first compressor impeller (170) is arranged between the shaft (70) and the body part (155) and the sealing of the second compressor impeller (175) is arranged between the compressor impeller (175) and the body part (155).

9. A turbocharger arrangement according to claim 1, **characterised in that** the shaft (70) comprises an axial flow channel (242), which extends from the compressor section to the bearings of one end of the shaft (70), for conveying the gas pressurised by the compressor section to a bearing (130) in order to cool it.

10. A turbocharger arrangement according to claim 1, **characterised in that** the radial bearings (125.1, 130) of the shaft (70) are supported at the first end by the body part(165) of the electric machine (65) and at the second end by the body part(160) of the turbine section (60).

11. A turbocharger arrangement according to anyone of the preceding claims, **characterised in that** the electric machine is provided with at least one flow channel (215, 216) for gas, and that the suction conduit of the compressor section is arranged in flow connection with the gas flow channel (215, 216) of the electric machine (65) so that suction air for the compressor section is arranged to pass through said at least one gas flow channel of the electric machine.

12. A turbocharger arrangement according to claim 11, **characterised in that** the gas flow channels of the electric machine (65) comprise an air gap (216) between the rotor and the stator part of the electric machine as well as gas flow channels (215) for the stator part and/or its body part arranged in the stator part (200).

13. A turbocharger arrangement according to claim 11, **characterised in that** the gas flow channels (215) of the stator part and/or its body part of the electric machine (65) are dimensioned in regard to the air gap (216) between the rotor and the stator part of the electric machine so that an exactly sufficient amount of air for cooling passes through said air gap, whereby the pressure loss in the cooling can be minimised.

14. A turbocharger arrangement according to claim 11, **characterised in that** cross-section of the gas flow channels of the stator part is 95 - 98 % of the total cross-sectional area of the gas flow channels of the electric machine (65).

## Patentansprüche

1. Turboladeranordnung (50), umfassend einen Verdichterabschnitt (55), einen Turbinenabschnitt (60) und eine elektrische Maschine (65), wobei der Verdichterabschnitt (55) eine erste Verdichterstufe (56) und eine zweite Verdichterstufe (57) umfasst, **dadurch gekennzeichnet, dass** der Verdichterabschnitt (55), der die erste Verdichterstufe (56) und die zweite Verdichterstufe (57) aufweist, in der Achsenrichtung zwischen dem Turbinenabschnitt (60) und der elektrischen Maschine (65) eingerichtet ist, und der zweistufige Verdichterabschnitt (55), der Turbinenabschnitt (60) und die elektrische Maschine (65) mit einer gleichen, gemeinsamen Welle (70) gekoppelt sind.

2. Turboladeranordnung nach Anspruch 1, **dadurch gekennzeichnet, dass** der Verdichterabschnitt (55), der Turbinenabschnitt (60) und die elektrische Maschine (65) so an der Welle (70) angeordnet sind, dass der Verdichterabschnitt in der Achsenrichtung zwischen der elektrischen Maschine und dem Turbinenabschnitt eingerichtet ist.

3. Turboladeranordnung nach Anspruch 1, **dadurch gekennzeichnet, dass** die elektrische Maschine (65) dazu eingerichtet ist, den Betrieb des Turbinenabschnitts (60) durch die Erzeugung von elektrischer Energie zu verzögern.

4. Turboladeranordnung nach Anspruch 1, **dadurch gekennzeichnet, dass** die elektrische Maschine (65) dazu eingerichtet ist, den Betrieb des Verdichterabschnitts (55) zu unterstützen.

5. Turboladeranordnung nach Anspruch 1, **dadurch gekennzeichnet, dass** zwischen der ersten Verdichterstufe (56) und der zweiten Verdichterstufe (57) ein Zwischenkühler (145) in einem Durchflusskanal für Gas angeordnet ist.

6. Turboladeranordnung nach Anspruch 1, **dadurch gekennzeichnet, dass** die elektrische Maschine mit einem Dauermagnetrotor (190) versehen ist.

7. Turboladeranordnung nach Anspruch 1, **dadurch gekennzeichnet, dass** die Dichtungen (250) der Verdichterräder (170, 175) der Verdichterstufen so angeordnet sind, dass die gesamte Krafteinwirkung der Verdichterstufen 90 - 110 % der axialen Kraft (405), die durch den Turbinenabschnitt (60) auf die Welle (70) ausgeübt wird, beträgt.

8. Turboladeranordnung nach Anspruch 1, **dadurch gekennzeichnet, dass** die erste Verdichterstufe (56) und die zweite Verdichterstufe (57) jeweils ein Verdichterrad (170, 175) umfassen, das an der gemeinsamen Welle (70) eingerichtet ist, und dass die Dichtung (205) des ersten Verdichterrads (170) zwischen der Welle (70) und dem Körperteil (155) angeordnet ist und die Dichtung des zweiten Verdichterrads (175) zwischen dem Verdichterrad (175) und dem Körperteil (155) angeordnet ist.

9. Turboladeranordnung nach Anspruch 1, **dadurch gekennzeichnet, dass** die Welle (70) einen axialen Durchflusskanal (242) umfasst, der sich von dem Verdichterabschnitt zu den Lagern eines Endes der Welle (70) erstreckt, um das Gas, das durch den Verdichterabschnitt mit Druck beaufschlagt wurde, zu einem Lager (130) zu befördern, um dieses zu kühlen.

10. Turboladeranordnung nach Anspruch 1, **dadurch gekennzeichnet, dass** die Radiallager (125.1, 130) der Welle (70) an dem ersten Ende durch den Körperteil (165) der elektrischen Maschine (65) und an dem zweiten Ende durch den Körperteil (160) des Turbinenabschnitts (60) gehalten werden.

11. Turboladeranordnung nach einem der vorhergehenden Ansprüche, **dadurch gekennzeichnet, dass** die elektrische Maschine mit wenigstens einem Durchflusskanal (215, 216) für Gas versehen ist, und dass der Ansaugkanal des Verdichterabschnitts in einer Fließverbindung mit dem Gasdurchflusskanal (215, 216) der elektrischen Maschine (65) angeordnet ist, so dass Ansaugluft für den Verdichterabschnitt zum Verlauf durch den wenigstens einen Gasdurchflusskanal der elektrischen Maschine gebracht wird.

12. Turboladeranordnung nach Anspruch 11, **dadurch gekennzeichnet, dass** die Gasdurchflusskanäle der elektrischen Maschine (65) einen Luftspalt (216) zwischen dem Rotor und dem Statorteil der elektrischen Maschine wie auch Gasdurchflusskanäle (215) für den Statorteil und/oder seinen Körperteil, der in dem Statorteil (200) angeordnet ist, umfassen.

13. Turboladeranordnung nach Anspruch 11, **dadurch gekennzeichnet, dass** die Gasdurchflusskanäle (215) des Statorteils und/oder seines Körperteils der elektrischen Maschine (65) im Hinblick auf den Luftspalt (216) zwischen dem Rotor und dem Statorteil der elektrischen Maschine so in der Größe bemessen sind, dass durch den Luftspalt eine genau ausreichende Menge an Luft zum Kühlen verläuft, wodurch der Druckverlust beim Kühlen minimiert werden kann.

14. Turboladeranordnung nach Anspruch 11, **dadurch gekennzeichnet, dass** der Querschnitt der Gasdurchflusskanäle des Statorteils 95 - 98 % der gesamten Querschnittfläche der Gasdurchflusskanäle der elektrischen Maschine (65) beträgt.

## Revendications

1. Agencement de turbocompresseur (50) comprenant une section de compresseur (55), une section de turbine (60) et un moteur électrique (65), laquelle section de compresseur (55) comprend un premier étage de compresseur (56) et un second étage de compresseur (57), **caractérisé en ce que** la section de compresseur (55) présentant le premier étage de compresseur (56) et le second étage de compresseur (57) est adaptée axialement entre la section de turbine (60) et le moteur électrique (65), la section de compresseur à deux étages (55), la section de turbine (60) et le moteur électrique (65) étant couplés à un même arbre commun (70).

2. Agencement de turbocompresseur selon la revendication 1, **caractérisé en ce que** la section de compresseur (55), la section de turbine (60) et le moteur électrique (65) sont agencés sur l'arbre (70) de telle façon que la section de compresseur est adaptée axialement entre le moteur électrique et la section de turbine.

3. Agencement de turbocompresseur selon la revendication 1, **caractérisé en ce que** le moteur électrique (65) est agencé pour retarder le fonctionnement de la section de turbine (60) en produisant de l'énergie électrique.

4. Agencement de turbocompresseur selon la revendication 1, **caractérisé en ce que** le moteur électrique (65) est agencé pour aider au fonctionnement de la section de compresseur (55).

5. Agencement de turbocompresseur selon la revendication 1, **caractérisé en ce qu'**un refroidisseur intermédiaire (145) est agencé entre le premier étage de compresseur (56) et le second étage de compresseur (57) dans un canal d'écoulement pour le gaz.

6. Agencement de turbocompresseur selon la revendication 1, **caractérisé en ce que** le moteur électrique est doté d'un rotor à aimant permanent (190).

7. Agencement de turbocompresseur selon la revendication 1, **caractérisé en ce que** les étanchéités (250) des hélices du compresseur (170, 175) des étages du compresseur sont agencées de façon à ce que l'impact de force total des étages du compresseur fait 90 - 110 % de la force axiale (405) exercée sur l'arbre (70) par la section de turbine (60).

8. Agencement de turbocompresseur selon la revendication 7, **caractérisé en ce que** le premier étage de compresseur (56) et le second étage de compresseur (57) comprennent une hélice de compresseur (170, 175), respectivement, adaptée sur l'arbre commun (70), et **en ce que** l'étanchéité (205) de l'hélice du premier compresseur (170) est agencée entre l'arbre (70) et la partie de corps (155), et l'étanchéité de l'hélice du second compresseur (175) est agencée entre l'hélice du compresseur (175) et la partie de corps (155).

9. Agencement de turbocompresseur selon la revendication 1, **caractérisé en ce que** l'arbre (70) comprend un canal d'écoulement axial (242), qui s'étend de la section de compresseur vers les paliers d'une extrémité de l'arbre (70), pour transporter le gaz pressurisé par la section de compresseur vers un palier (130) afin de le refroidir.

10. Agencement de turbocompresseur selon la revendication 1, **caractérisé en ce que** les paliers radiaux (125.1, 130) de l'arbre (70) sont supportés sur la première extrémité par la partie de corps (165) du moteur électrique (65) et sur la seconde extrémité par la partie de corps (160) de la section de turbine (60).

11. Agencement de turbocompresseur selon l'une quelconque des revendications précédentes, **caractérisé en ce que** le moteur électrique est doté d'au moins un canal d'écoulement (215, 216) pour le gaz, et que le conduit d'aspiration de la section de compresseur est agencé en liaison d'écoulement avec le canal d'écoulement gazeux (215, 216) du moteur électrique (65) de sorte que de l'air d'aspiration pour la section de compresseur est agencé pour passer à travers l'au moins un canal d'écoulement gazeux du moteur électrique.

12. Agencement de turbocompresseur selon la revendication 11, **caractérisé en ce que** les canaux d'écoulement gazeux du moteur électrique (65) comprennent un espace d'air (216) entre le rotor et la partie de stator du moteur électrique ainsi que des canaux d'écoulement gazeux (215) pour la partie de stator et/ou sa partie de corps agencée(s) dans la partie de stator (200).

13. Agencement de turbocompresseur selon la revendication 11, **caractérisé en ce que** les canaux d'écoulement gazeux (215) de la partie de stator et/ou sa partie de corps du moteur électrique (65) sont dimensionnés par rapport à l'espace d'air (216) entre le rotor et la partie de stator du moteur électrique de façon à ce qu'une quantité exactement suffisante d'air pour refroidir passe à travers l'espace d'air, ce par quoi la perte de pression dans le refroidissement peut être réduite au minimum.

14. Agencement de turbocompresseur selon la revendication 11, **caractérisé en ce que** la section transversale des canaux d'écoulement gazeux de la partie de stator fait 95 - 98 % de l'aire transversale totale des canaux d'écoulement gazeux du moteur électrique (65).
